# EUROPEAN PATENT SPECIFICATION

(11) **EP 1 166 471 B1**
(45) Date of publication and mention of the grant of the patent: **01.06.2005**
(21) Application number: 00921637.5
(22) Date of filing: 03.04.2000
(51) Int. Cl.: H04B 10/10

(54) **IMPROVED CIRCUIT DESIGN AND OPTICS SYSTEM FOR INFRARED SIGNAL TRANSCEIVERS**
VERBESSERTE SCHALTUNG UND OPTISCHE ANORDNUNG FÜR INFRAROTSIGNAL-TRANSCEIVER
SYSTEME AMELIORE D'OPTIQUE ET DE CONCEPTION DE CIRCUITS POUR EMETTEURS-RECEPTEURS DE SIGNAUX INFRAROUGES

(30) Priority: 02.04.1999 US 285608
(43) Date of publication of application: 02.01.2002
(73) Proprietor: Zilog, Inc., Campbell, CA 95008 (US)
(72) Inventor: HAMILTON, T., Allan, San Jose, CA 95110-1308 (US)
(74) Representative: Evens, Paul Jonathan
(86) International application number: PCT/US2000/008858
(87) International publication number: WO 2000/060774

(56) References cited:
- EP-A- 0 876 011
- DE-A- 19 727 633
- US-A- 5 506 445

## Description

### BACKGROUND OF THE INVENTION

### 1. Field of the Invention

This invention relates generally to infrared communications systems and, more specifically, to an Improved Circuit Design and Optics System for Infrared Signal Transceivers.

### 2. Description of Related Art

As technology becomes continually more accessible to the "common man," the ability to use, store, transfer and otherwise manipulate information has become the focus of most businesses as well as for the individual consumer. Access to the information resources is commonly by some sort of network system, including World Wide Web, "Intranets", local area networks, wide area networks, as well as corporate databases.

While the conventional method for connecting to one of these information networks has been via cable and wire, as the reliance upon connectivity to information has deepened, the desire to gain such access from mobile or portable devices has strengthened. These portable devices, such as Personal Digital Assistants, handheld computers, and even cellular telephones are now being connected to each other and to networks via Infrared Data Communications. In fact, it is virtually impossible to purchase a notebook computer today that does not include an Infrared Data Communications assembly resident within it.

DE 197 27633, US 5506 445, and EP 0876 011 disclose examples of known infrared transceiver systems.

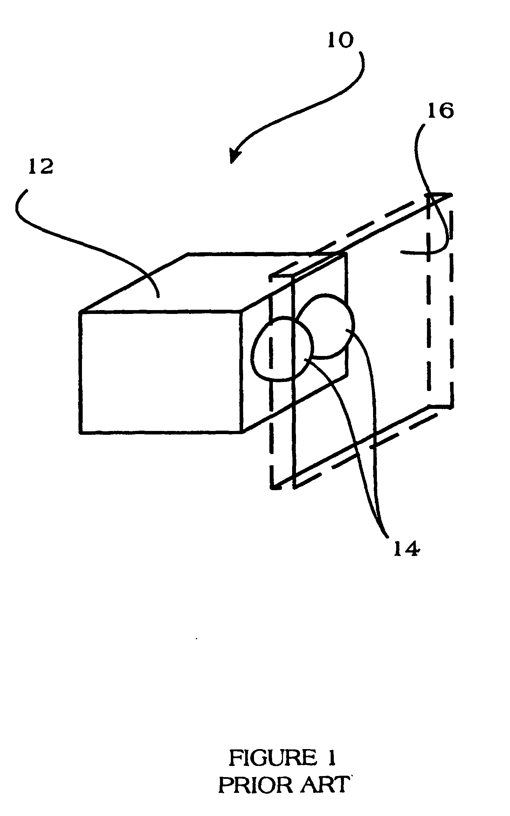

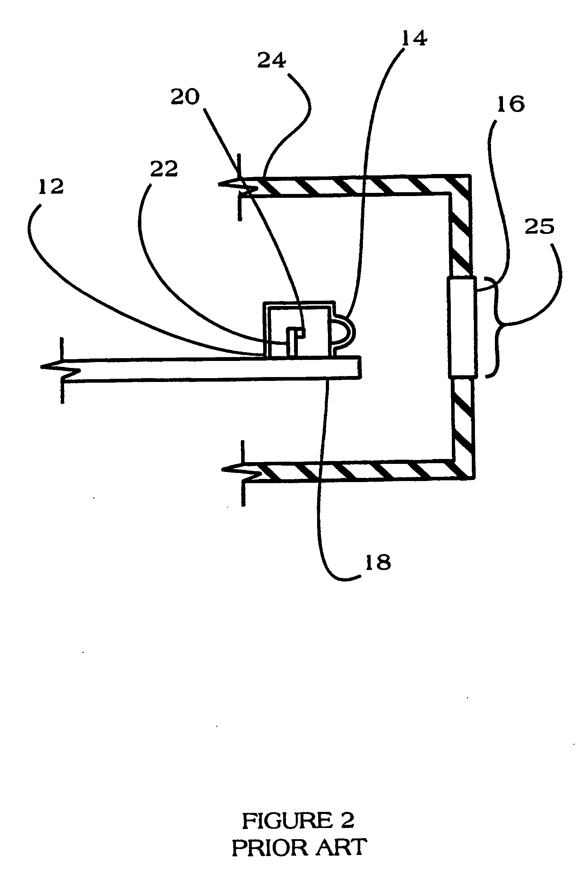

Figure 1 depicts the typical infrared data communications hardware that is installed in electronic devices; it is a perspective view of a prior infrared transceiver assembly 10. As discussed above, these assemblies 10 are found in virtually every notebook computer sold today. The components of the assembly 10 are virtually identical across all manufacturers' product lines, with few exceptions. The typical assembly 10 comprises a housing 12 within which the infrared emitter and detector (see Figure 2) are mounted. The "transceiver" is actually data processing circuitry for managing the emitter and detector; it's location is therefore not optically-dependent (and, in fact, it operates better in "IR darkness"). The housing 12 usually is molded from plastic, with a primary lens unit 14 formed in one of the sides of the housing 12. As can be seen, the conventional primary lens unit 14 comprises two lenses; one each for the emitter and detector (both lenses with similar optical properties, and both requiring precision and reproducibility). Adjacent to the housing 12, is a protective lens 16. The protective lens 16 is generally constructed from a colored plastic that is transparent to infrared signals. In most cases, the protective lens 16 is attached to the external case of the electronic device, its purpose being to protect the inner workings of the device, while also permitting infrared signals to pass in and out. Figure 2 gives further detail regarding the workings of the prior assembly 10.

Figure 2 is a cutaway side view of the prior infrared transceiver assembly 10 of Figure 1. As can be seen, the housing 12 is generally attached to the "motherboard" 18 or other printed circuit board within the electronic device. Within the housing 12 is located an emitter/detector pair 20. It should be understood that it is also common to place more than a single emitter and/or detector inside of one housing 12 (e.g. two emitters and one detector, etc.); an emitter/detector pair 20 is used here simply in the interest of brevity.

The emitter/detector pair 20 transmit and receive infrared signals. The emitter/detector pair 20 is typically mounted to a stand 22, and thereby positioned in the signal path of the lens 14 in order to send and receive infrared signals therethrough. As discussed earlier, the appliance case 24 has an aperture 25 formed therein, and into which a protective lens 16 is installed. The protective lens 16 simply protects the inner workings of the appliance from contamination.

This prior assembly 10 has several deficiencies. First, the protrusion of the primary lens unit 14 can make the housing 12 difficult to grasp by humans and/or machines assembling the electronic devices. The difficulty in grasping can result in manufacturing defects, production delays, and generally higher costs of production. What is needed is a primary lens unit design that does not present a grasping difficulty to assemblers.

Second, the primary lens unit 14 mandates higher manufacturing and design standards than the average plastic housing for an electronic device to insure that the light-refractive traits of the lens 14 are predictable and repeatable. Because the primary lens unit 14 is integral to the housing 12, the entire housing 12 becomes subject to the elevated quality standards. It would be much more cost-effective if the design of the integral primary lens unit 14 did not mandate elevated quality standards for the entire housing 12.

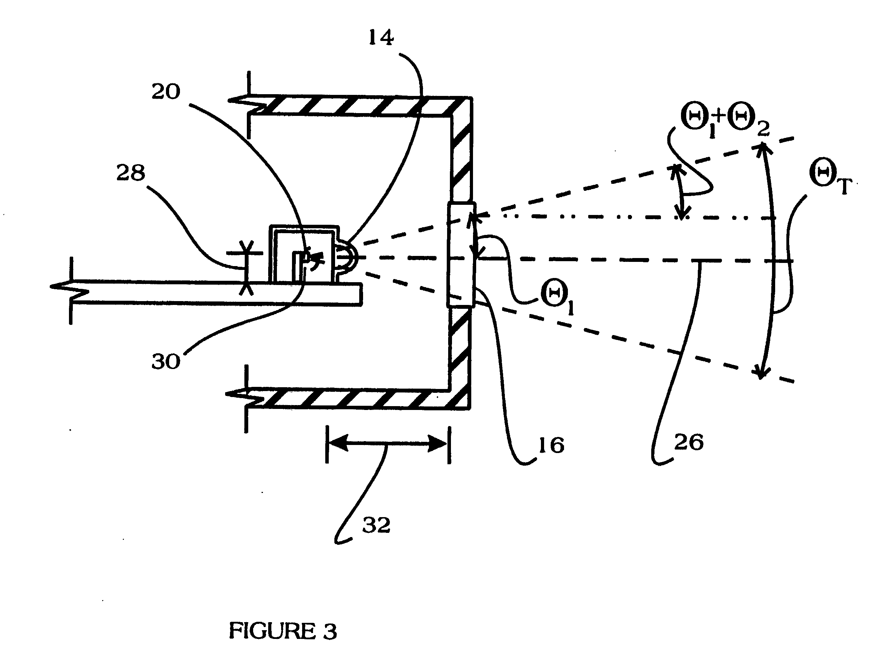

Other defects with the prior assembly 10 are illuminated by Figure 3. Figure 3 is a cutaway side view of the transceiver assembly 10 of Figures 1 and 2, depicting the typical transmit dispersion angle θ_{T} of the assembly 10. By current IrDA (Infrared Data Association) standards, the transmit dispersion angle θ_{T} must be at least 15 (fifteen) degrees from the focal axis 26 (in two dimensions, of course). The transmit dispersion angle θ_{T} is the sum-total of the primary lens refraction angle θ₁ and the protective lens refraction angle θ₂. All prior assemblies 10 include a protective lens 16 that has no refractive power; the protective lens refraction angle θ₂ is, therefore, typically 0 degrees. Consequently, the conventional primary lens unit refraction angle θ₁ is 15 (fifteen) degrees.

There are several design implications resulting from having the entire transmit dispersion angle θ_{T} provided by the primary lens unit 14. The emitter/detector pair 20 must be located at the focal point 30 of the primary lens unit 14 in order to insure that no signal data is lost. As such, the height 28 (as well as horizontal placement) of the emitter/detector pair 20 is very specifically defined. Moreover, the stand (see Figure 2) must be included in order to raise the emitter/detector pair 20 above the printed circuit board 18. It would be a better arrangement if the emitter/detector pair 20 could be mounted directly to the printed circuit board 18. Furthermore, the separation 32 between the primary lens unit 14 and the protective lens 16 is very critical. Unless the primary lens unit 14 is very close to the protective lens 16, the protective lens 16 must be relatively large or else the mandated angular dispersion will not be met. A large protective lens 16 can be a serious design constraint for the smaller electronic devices, where component real estate is very tight. What would be better is a design that permits the protective lens 16 to be very small, allows the lens separation distance 32 to be flexible, and still meets the IrDA angular dispersion requirements.

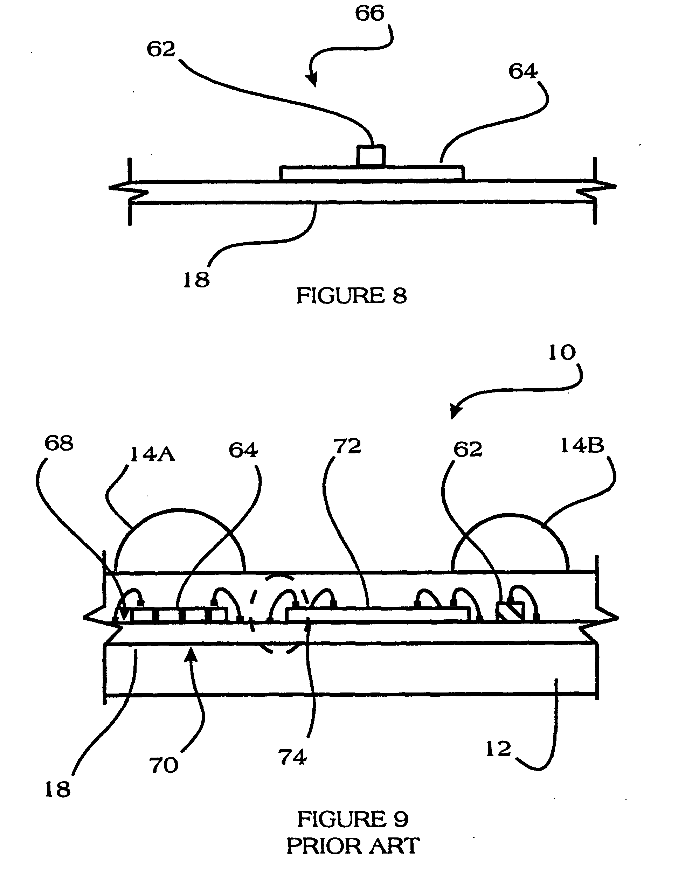

Another problem exists in regard to the conventional design for Ir transceiver assemblies. As can be seen from Figure 9, which depicts the Ir transceiver assembly 10 of Figures 1 and 2, the Ir transceiver assembly 10 comprises a housing 12 within which is found a PC board 18. It is understood that the PC board in some cases might be replaced with a lead frame. The PC board generally has a front side 68 and a back side 70; the housing 12 is typically formed with a detector lens element 14A and an emitter lens element 14B (which together comprise primary lens element 14 described above in connection with Figure 1). Mounted on the PC board 18 and in the optical path of the detector lens element 14A is conventionally detector 64. Also mounted on the PC board 18, and in the optical path of the emitter lens element 14B, is generally found an emitter 62. Transceiver circuit device 72, which is typically an integrated circuit device comprising hardware which can send and receive signals from the emitter 62 and the detector 64, respectively, is also attached to the PC board 18, (geographically located between the detector 64 and the emitter 62). For the PC board 18 situation, transceiver circuit device 72, detector 64 and emitter 62 are electrically connected to the pc board 18 via connection means 74 which in this case is of the wire bond type conventionally known in the field. The problem with the conventional Ir transceiver assembly 10 is one of real estate. In the package shown in Figure 9 the requirement for separate footprints for the emitter 62, the detector 64 and the transceiver circuit device 72 mandates that the PC board 18 is wide and further mandates that there be a plurality of lens elements. It would be beneficial if this large combination of footprints could be minimized by reducing the device size of the transceiver assembly and potentially the cost, among other advantages.

### SUMMARY OF THE INVENTION

In light of the aforementioned problems associated with the prior devices, it is an object of the present invention to provide an Improved Circuit Design and Optics System for Infrared Signal Transceivers. It is a further object that the improved system include a IR transceiver assembly that is easily grasped by assemblers. It is also an object that the primary and secondary lenses associated with the transceiver system be easier to manufacture than current lens designs. It is a still further object that the heretofore critical lens separation between the emitter/detector devices and the primary lens become a flexible dimension, dependent only upon the particular appliance in which the system is installed. It is another object that the stand for emitter/detector devices be eliminated as a result of exchanging a non-imaging transceiver system with the current imaging transceiver system. Finally, it is an object that emitter/detector devices be assembled or otherwise combined into a single emitter/detector device stack. A further object of the present invention is to provide and improve the Ir transceiver assembly that has much smaller outside dimensions.

### BRIEF DESCRIPTION OF THE DRAWINGS

The objects and features of the present invention, which are believed to be novel, are set forth with particularity in the appended claims. The present invention, both as to its organization and manner of operation, together with further objects and advantages, may best be understood by reference to the following description, taken in connection with the accompanying drawings, of which:
Figure 1 is a perspective view of a prior infrared transceiver assembly;
Figure 2 is a cutaway side view of the prior infrared transceiver assembly of Figure 1;
Figure 3 is a cutaway side view of the transceiver assembly of Figures 1 and 2, depicting the typical transmit dispersion angle;
Figure 4 is a cutaway side view of an example of the improved transceiver assembly;
Figure 5 is a cutaway side view of another example of the improved transceiver assembly;
Figure 6 is a partial cutaway side view of yet another preferred feature of the improved transceiver assembly;
Figure 7 is a partial perspective view of still another example of the improved transceiver;
Figure 8 is a partial cutaway side view of an integrated emitter/detector device stack;
Figure 9 is a cutaway top view of the conventional Ir transceiver assembly depicted in Figure 1;
Figure 10 is a cutaway top view of the improved Ir transceiver assembly of the present invention depicting a backside-mounted transceiver circuit device;
Figure 11 is a cutaway top view of another improved Ir transceiver assembly depicting another backside-mounted transceiver circuit device 9;
Figure 12 is a cutaway top view of yet another improved Ir transceiver assembly depicting an integrated emitter/detector device and a backside-mounted transceiver circuit device;
Figure 13 is a cutaway top view of another improved Ir transceiver assembly also employing the integrated emitter/detector device of the present invention and another example of a backside-mounted transceiver circuit device; and
Figure 14 is a cutaway top view of still another improved Ir transceiver assembly using a front side-mounted transceiver/emitter/detector stack.

### DETAILED DESCRIPTION OF THE PREFERRED EMBODIMENTS

The following description is provided to enable any person skilled in the art to make and use the invention and sets forth the best modes contemplated by the inventors of carrying out their invention. Various modifications, however, will remain readily apparent to those skilled in the art, since the generic principles of the present invention have been defined herein specifically to provide an Improved Optics System for Infrared Signal Transceivers.

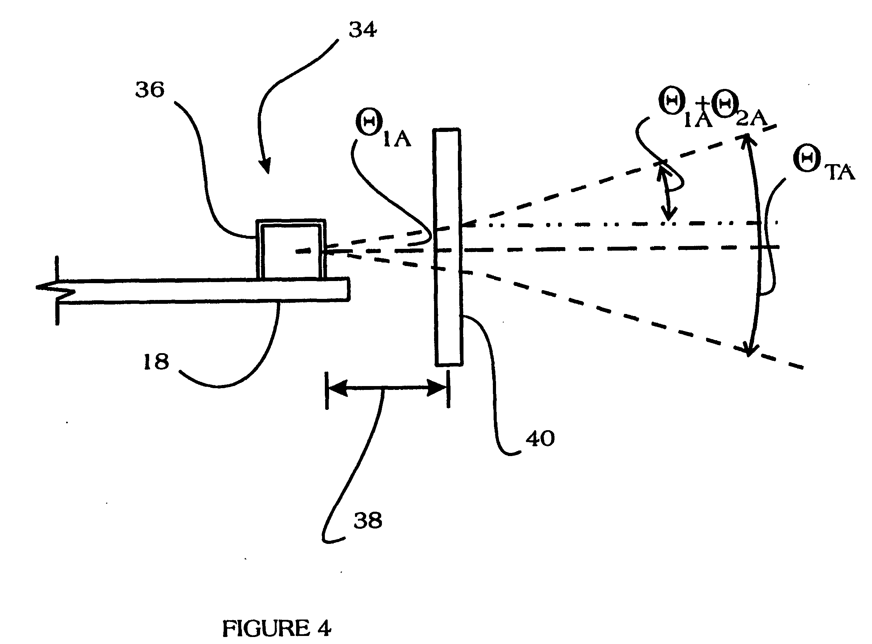

The present invention can best be understood by initial consideration of Figure 4. Figure 4 is a cutaway side view of an example of the improved transceiver assembly 34. Similar to the prior assemblies, this improved assembly comprises a housing 36 and a secondary lens 40, which are separated by a distance 38. What is unique about this particular assembly 34 is the optical characteristics of the secondary lens 40. Instead of simply being a protective cover for the electronics, this secondary lens 40 also has refractive characteristics. As such, the transmit dispersion angle θ_{TA} of this preferred assembly 34 is equal to the primary lens unit refraction angle θ_{1A} plus the additional secondary lens refraction angle θ_{2A}. In this new arrangement, therefore, a much wider field of transmission is possible, because the transmit dispersion angle θ_{TA} can be increased to well beyond the standard fifteen degrees. Furthermore, the secondary lens 40 can be exchangeable with other secondary lenses having different optical characteristics. In this manner, a limitless variety of dispersion angles θ_{TA} can be achieved for a single piece of equipment.

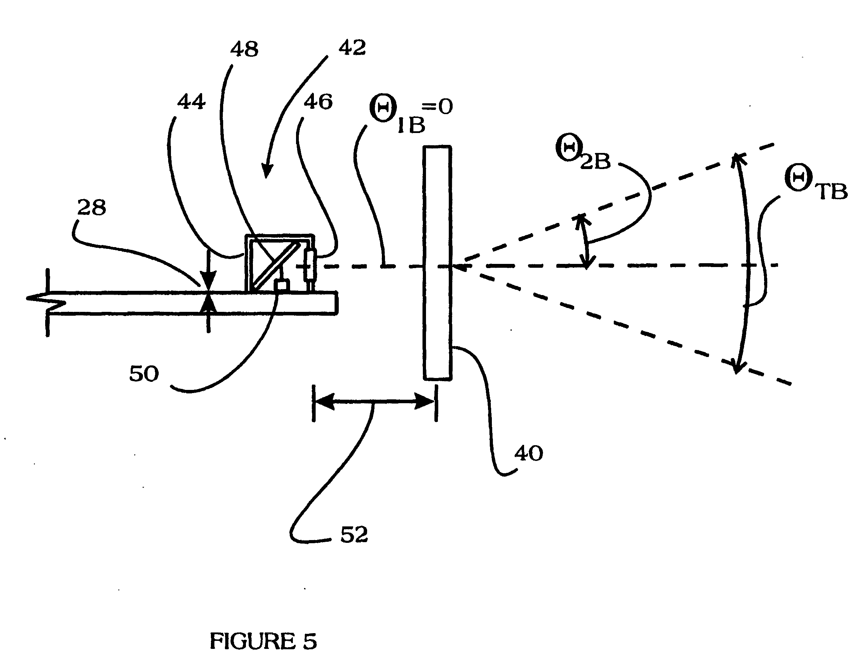

Now turning to Figure 5, we might further explore the implications and benefits of the new design. Figure 5 is a cutaway side view of another example of the improved transceiver assembly 42. Similar to the assembly 34 of Figure 4, this assembly 42 comprises a secondary lens 40 that has refractive power. In this present example, however, the primary lens unit 46 has no refractive power (i.e. θ_{1B} = 0 degrees). As such, the entire transmit dispersion angle θ_{TB} is determined by the contributions from the secondary lens 40; no redirection of the light occurs as it passes through the primary lens unit 46.

Because there is no redirection of the light by the primary lens unit 46, the lens separation distance 52 ceases to be determined by the size of the aperture (see Figure 2) and secondary lens 40. This provides a significant advantage over the prior assemblies because the housing 44 can be placed in a location on the PC board that is convenient to the PC board layout, without the concern for its distance from the case (and the secondary lens 40).

Furthermore, there are other benefits to this new design. Since there is no focussing of the light by the primary lens unit 46, there is no focal point for the light. The conventional emitter/detector pair 20 can be replaced with "non-imaging" emitter/detector pair 50 that is not dependent upon a focal point. "Non-imaging" detectors simply detect any (and all) incident infrared light - they are commonly less expensive than the "imaging" detectors in use by conventional IR transceiver assemblies. The incident (and transmitted) light may simply be redirected by a mirror 48 and down to (or out from) the emitter/detector pair 50. Because there is no longer a focal point to deal with, the location of the emitter/detector pair 50' is very flexible. In fact, it would be natural to mount the emitter/detector pair 50 directly onto the PC board, with the emitter/detector height 28 being effectively zero. This means that the emitter/detector pair 50 can be mounted easily by conventional PC board assembly processes - the housing might actually be added on later. Consequently, the manufacturing costs attributable to the IR transceiver assembly 42 are substantially reduced.

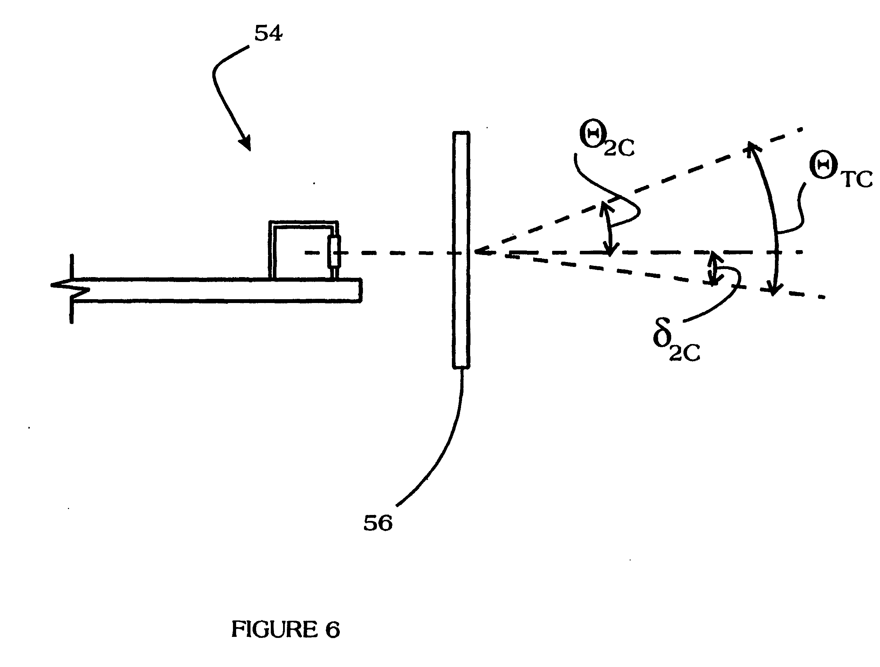

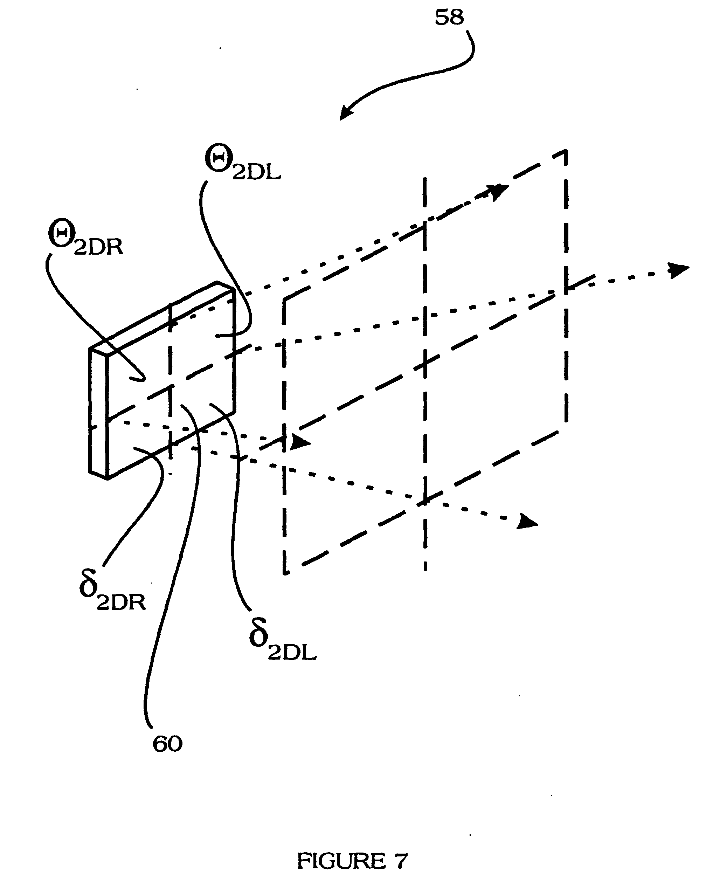

In another series of examples, there may be different dispersion angles for different regions of the secondary lens 56. An example is provided in Figure 6, which is a partial cutaway side view of yet another preferred embodiment of the improved transceiver assembly 54 of the present invention. In this Figure, the transmit dispersion angle θ_{TC} is equal to the total of the secondary lens upper region refraction angle θ_{2C} and the secondary lens lower region refraction angle φ_{2C}. As can be seen, these two regions have different refracting characteristics. It should be appreciated that a virtually limitless set of combinations of different refracting regions may be desired. Figure 7 is a partial perspective view of still another preferred embodiment of the infrared transceiver assembly 58 of the present invention. In this embodiment, the secondary lens 60 is divided into four regions, each having unique refractive characteristics, as indicated by the upper left refraction angle θ_{2DL}, the upper right refraction angle θ_{2DR}, the lower left refraction angle φ_{2DL}, and the lower right refraction angle φ_{2DR}. Again, it should be apparent that this is simply one design example; a wide variety of regions and refraction characteristics is expected.

It is also possible that a secondary lens employing shiftable and/or variable refracting regions is currently available, such as via Liquid Crystal technology. Furthermore, the secondary lens might be configured to mask out certain regions by being selectively opaque to infrared signal transmission. Each of these features is an significant advancement over the prior devices.

Another significant advancement of the present invention involves assembling or otherwise combining the emitter/detector pair into a single, integrated emitter/detector device stack 66, as depicted by Figure 8. The emitter is much smaller than the detector (0.3 mm² vs. 1.8 mm² conventionally); furthermore, the emitter circuitry is conventionally built upon a transparent substrate. It is an aspect of the present invention that the emitter 62 be placed directly on top of the detector 64 (i.e. in the path of incident and exiting IR signals) to form an integrated emitter/detector device 66. This was very difficult under prior transceiver assembly designs, because the emitter and detector would most likely have different focal points. Under the improvement described previously herein, however, the focal point of the primary lens unit is no longer an issue.

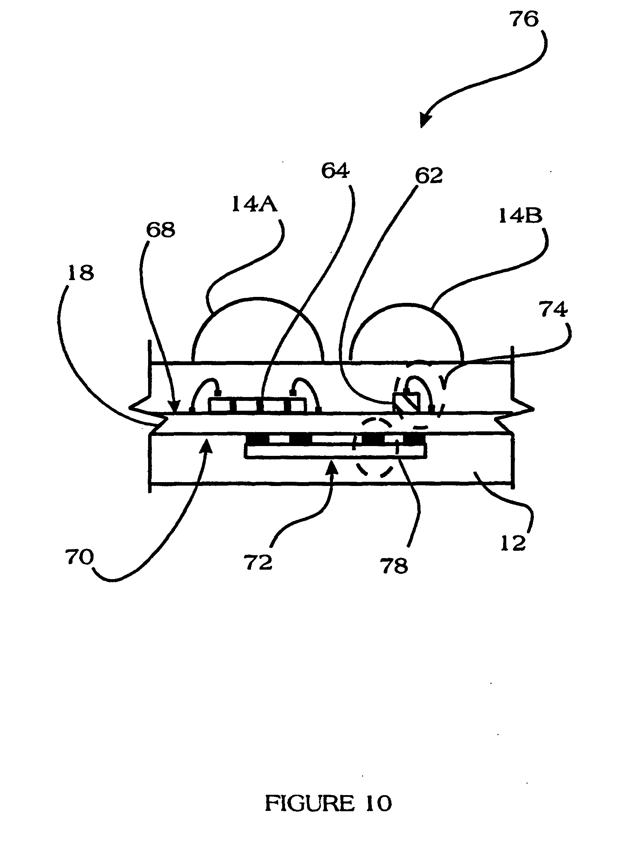

Now turning to Figure 10, we can take a look at another example. Figure 10 is a cutaway top view of the improved Ir transceiver assembly 76 of the present invention depicting a backside-mounted transceiver circuit device 72. Similar to Figure 9, the device of Figure 10 has a PC board 10 having a front side 68 and a backside 70. Also, this transceiver assembly 76 includes a detector lens element 14A and an emitter lens element 14B located to the front side of the PC board 68 and electrically connected through connection means 74. What is unique about this example is that the transceiver circuit device 72 is actually located on the backside of the PC board 70. In this case, the transceiver circuit device 72 is electrically connected to the PC board 18 via alternate connection means 78, which in this case comprises "bump" attachment (a common device soldering method). As can be seen from the improved assembly 76 of Figure 10, since the transceiver circuit device 72 is no longer located between the detector lens element 14A and the emitter lens element 14B, the width of pc board 18 and therefore the size of the housing 12 is much narrower, allowing the assembly 76 to be much smaller in size.

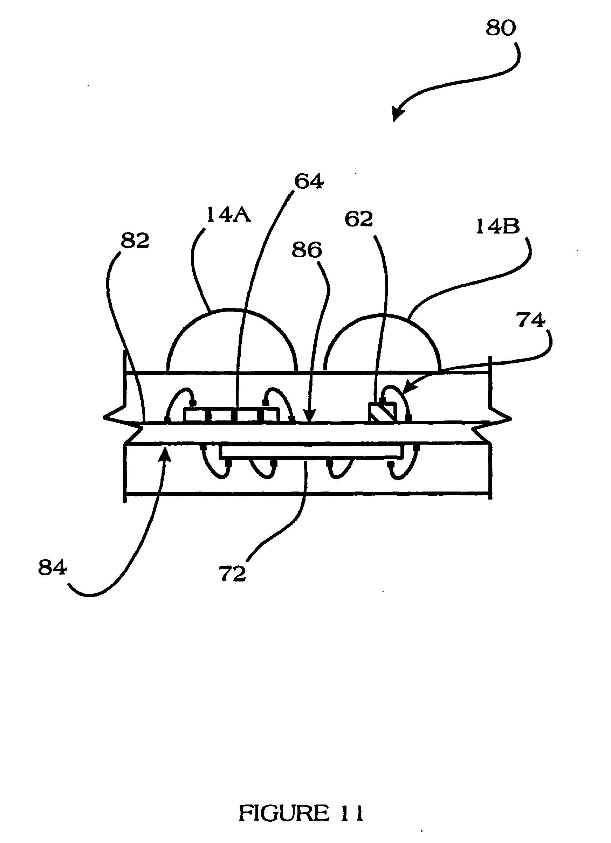

If we now turn to Figure 11, we can see yet another example of an improved Ir transceiver assembly 80. Figure 11 is a cutaway top view of another improved Ir transceiver assembly depicting another backside-mounted transceiver circuit device 72. In Figure 11, the base structure is a lead frame 82. A lead frame, like the PC board of the previous figures, is a common device mounting structure in the semi-conductor and electronics industry. The lead frame 82 has a back side 84 and a front side 86, just as with the PC board 18. In the transceiver assembly 80 of this example, the detector 64 and emitter 62 are both attached to the front side of the lead frame 86, however in this case, the transceiver circuit device 72 is attached to the backside of the lead frame 84, through the conventional connection means 74, comprising typical wire bond interconnection for electrical conductance. Just as with assembly 76 in Figure 10, this embodiment 80 provides the advantage of a reduced package size, as well as providing at least two mountin and connection options for the transceiver circuit device 72.

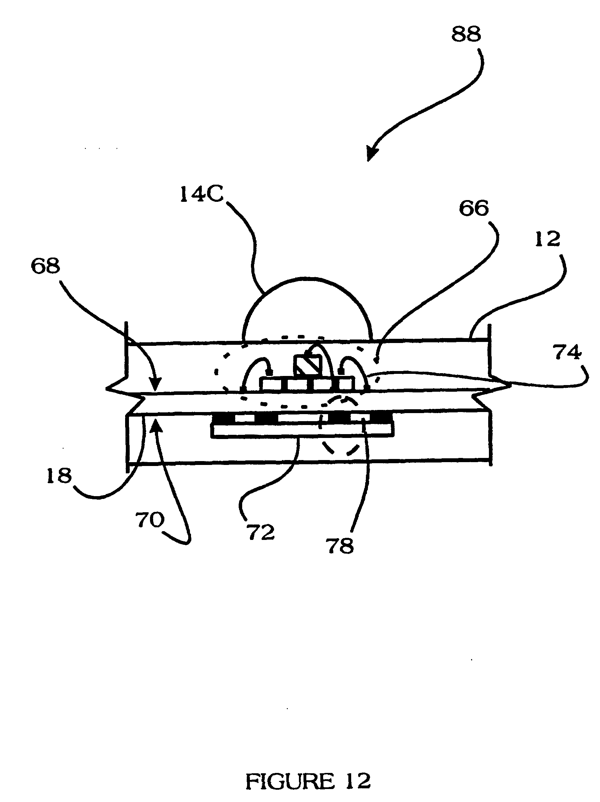

Figure 12 depicts yet another improved Ir transceiver assembly 88 of the present invention. Figure 12 is a cutaway top view of yet another improved Ir transceiver assembly 88 depicting an integrated emitter/detector device 66 and a backside-mounted transceiver circuit device 72. In this example, the integrated emitter/detector device 66 is employed on the front side of the PC board 68 and connected thereto via connection means 74. Since the emitter/detector device 66 is integrated, the need for two lens elements is eliminated, resulting in a single primary lens element 14C. Furthermore, the transceiver circuit device 72 is attached to the backside of the PC board 70, just as described above in connection with Figure 10. As can be appreciated, this preferred embodiment of the transceiver assembly 88 provides even further package size reduction over the previous units.

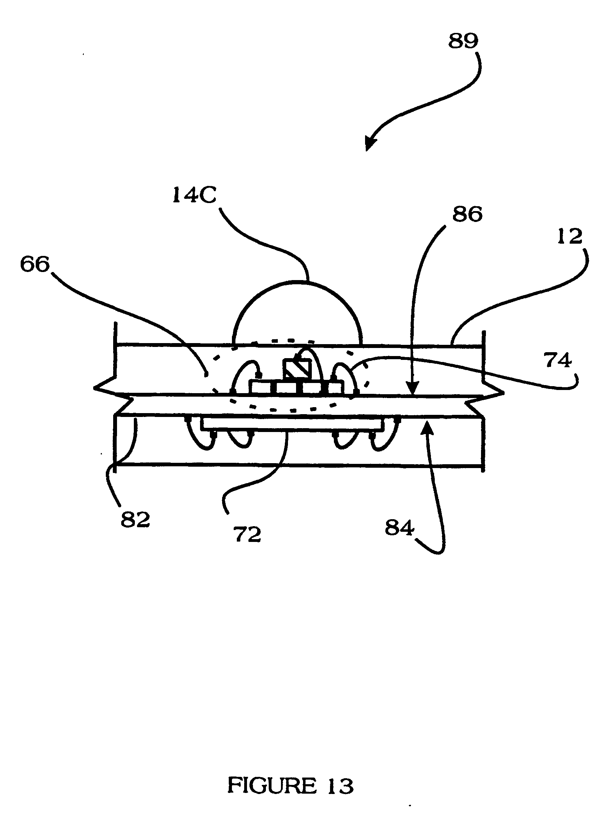

Similarly, Figure 13 depicts the integrated emitter/detector device 66 attached to the lead frame's front side 86 with the transceiver circuit device 72 being attached to the backside of the lead frame 84. Figure 13 is a cutaway top view of another improved Ir transceiver assembly 89 also employing the integrated emitter/detector device 66 of the present invention and another example of a backside-mounted transceiver circuit device 72. Again, like the assembly 88 of Figure 12, this present embodiment of an improved Ir transceiver assembly 89 provides significant benefits in package size reduction.

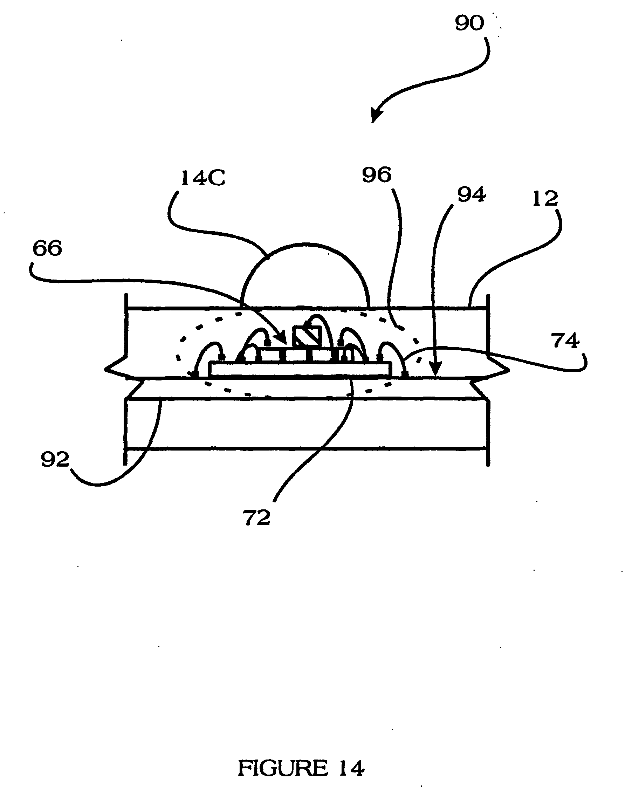

Finally, we will turn to Figure 14 to examine yet another example of an improved Ir transceiver assembly 90. Figure 14 is a cutaway top view of still another improved Ir transceiver assembly 90 having a front side-mounted transceiver/emitter/detector stack. This assembly 90 provides the smallest package size yet. In this case, the integrated emitter/detector device 66 and the transceiver circuit device 72 are stacked together in a transceiver/emitter/detector stack 96. Since the emitter/detector device 66 and the transceiver circuit device 72 are stacked, all devices can be attached to the front side of the circuit structure 94. As can be appreciated, the circuit structure 92 might comprise a pc board or a lead frame or other conventional structural circuit-providing devices conventional in the art. It should be understood from this view that since all of the devices are attached to the front side of the circuit structure 94, the housing 12 is not only reduced in width, but is also thinner in depth than those improvements previously described in connection with Figures 10 through 13. In other examples, there might be multiple emitter/detector devices 66 spread out over the face of a single transceiver circuit device 72, which is then attached to the front side of the circuit structure 94. Furthermore, and as discussed previously in connection with Figures 3 through 8, while a single primary lens element 14C is shown here, this improved Ir transceiver assembly 90 might also include an embodiment where there is a primary lens element 14C as well as a secondary lens element 40. Still further, the example is conceived where in a single device, the transceiver circuitry as well as the emitter and detector circuitry are combined such that a single set of connection means 74 attaches this integrated device to the circuit structure front side 94.

Those skilled in the art will appreciate that various adaptations and modifications of the just-described examples can be configured without departing from the scope of the invention. Therefore, it is to be understood that, within the scope of the appended claims, the invention may be practiced other than as specifically described herein.

## Claims

1. A transceiver system (90) for sending and receiving infrared signals, comprising:
a circuit structure (94) having a transceiver/emitter/detector stack (96) located on one side thereof, said transceiver/emitter/detector stack (96) comprising at least one emitter and at least one detector forming an integrated emitter/detector device (66), and at least one transceiver circuit device (72); and
a primary lens element (14C) providing an optical path, said primary lens element (14C) and said transceiver/emitter/detector stack (96) cooperatively located such that said transceiver/emitter/detector stack (96) is aligned with said optical path;
**characterised by** further comprising a secondary lens unit (40) aligned along said optical path.

2. The device (90) of claim 1, wherein said emitter/detector device (66) is directly electrically connected to said transceiver circuit device (72).

3. The device (90) of claim 2, wherein said emitter/detector device (66) comprises at least two emitters and a single detector.

4. The device (90) of claim 2, wherein said transmitter/emitter/detector stack (96) comprises a single discrete device.

5. The device (90) of claim 1, further comprising a housing encapsulating said circuit structure (94) and said transceiver/emitter/detector stack (96).

## Patentansprüche

1. Ein Transceiversystem (90) zum Senden und Empfangen von Infrarotsignalen, das aufweist:
eine Schaltkreisstruktur (94), auf deren einer Seite eine Transceiver/Emitter/Detektor-Baugruppe (96) angeordnet ist, wobei die Transceiver/Emitter/Detektor-Baugruppe (96) zumindest einen Emitter und zumindest einen Detektor, die eine integrierte Emitter/Detektor-Vorrichtung (66) bilden, und zumindest eine Transceiverschaltkreisvorrichtung (72) aufweist; und
ein erstes Linsenelement (14C), das einen Lichtweg schafft, wobei das erste Linsenelement (14C) und die Transceiver/Emitter/Detektor-Baugruppe (96) einander unterstützend angeordnet sind, so dass die Transceiver/Emitter/Detektor-Baugruppe (96) in einer Linie mit dem Lichtweg liegt;
**dadurch gekennzeichnet**, das es weiterhin eine zweite Linseneinheit (40) aufweist, die entlang dem Lichtweg ausgerichtet ist

2. Die Vorrichtung (90) nach Anspruch 1, wobei die Emitter/Detektor-Vorrichtung (66) mit der Transceiverschaltkreisvorrichtung (72) direkt elektrisch verbunden ist.

3. Die Vorrichtung (90) nach Anspruch 2, wobei die Emitter/Detektor-Vorrichtung (66) zumindest zwei Emitter und einen einzigen Detektor aufweist.

4. Die Vorrichtung (90) nach Anspruch 2, wobei die Transceiver/Emitter/Detektor-Baugruppe (96) eine einzige diskrete Vorrichtung aufweist.

5. Die Vorrichtung (90) nach Anspruch 1, die weiterhin ein Gehäuse aufweist, das die Schaltkreisstruktur (94) und die Transceiver/Emitter/Detektor-Baugruppe (96) umschließt.

## Revendications

1. Système d'émetteur-récepteur (90) pour envoyer et recevoir des signaux infrarouges, comprenant :
une structure de circuit (94) ayant un empilement émetteur-récepteur/émetteur/détecteur (96) situé sur un côté de celle-ci, ledit empilement émetteur-récepteur/-émetteur/détecteur (96) comprenant au moins un émetteur et au moins un détecteur formant un dispositif émetteur/détecteur (66) intégré, et au moins un dispositif formant circuit d'émetteur-récepteur (72) ; et
un élément formant lentille principale (14C) fournissant un chemin optique, ledit élément formant lentille principale (14C) et ledit empilement émetteur-récepteur/émetteur/détecteur (96) étant situé de manière à coopérer de telle sorte que ledit empilement émetteur-récepteur/émetteur/détecteur (96) soit aligné avec ledit chemin optique ;
**caractérisé en ce qu'**il comprend en outre une unité formant lentille secondaire (40) alignée avec ledit chemin optique.

2. Le dispositif (90) selon la revendication 1, dans lequel ledit dispositif émetteur/détecteur (66) est directement raccordé électriquement audit dispositif formant circuit d'émetteur-récepteur (72).

3. Le dispositif (90) selon la revendication 2, dans lequel ledit dispositif émetteur/détecteur (66) comprend au moins deux émetteurs et un seul détecteur.

4. Le dispositif (90) selon la revendication 2, dans lequel ledit empilement émetteur-récepteur/émetteur/-détecteur (96) comprend un seul dispositif distinct.

5. Le dispositif (90) selon la revendication 1, comprenant en outre un logement renfermant ladite structure de circuit (94) et ledit empilement émetteur-récepteur/ émetteur/détecteur (96).
